# EUROPEAN PATENT SPECIFICATION

(11) **EP 3 738 657 B1**
(45) Date of publication and mention of the grant of the patent: **28.01.2026**
(21) Application number: 19174821.9
(22) Date of filing: 16.05.2019
(51) Int. Cl.: B01D 1/22, F28D 9/00, F28F 3/08

(54) **A PLATE HEAT EXCHANGER, A HEAT EXCHANGING PLATE AND A METHOD OF TREATING A FEED SUCH AS SEA WATER**
PLATTENWÄRMETAUSCHER, WÄRMETAUSCHERPLATTE UND VERFAHREN ZUR BEHANDLUNG EINES ZUFLUSSES WIE ETWA MEERWASSER
ÉCHANGEUR DE CHALEUR À PLAQUES, PLAQUE D'ÉCHANGE DE CHALEUR ET PROCÉDÉ DE TRAITEMENT D'UN FLUX TEL QUE DE L'EAU DE MER

(43) Date of publication of application: 18.11.2020
(73) Proprietor: Alfa Laval Corporate AB, 221 00 Lund (SE)
(72) Inventor: ANDERSSON, Matz, SE-226 52 LUND (SE)
(74) Representative: Alfa Laval Attorneys

(56) References cited:
- EP-A2- 0 611 941
- WO-A1-2006/104443
- US-A- 4 869 067

## Description

The present invention relates to a plate heat exchanger, a heat exchanging plate and a method of treating a feed such as sea water. Specifically, the present invention relates to a plate as defined in the preamble of claim 1, and as illustrated in EP 0 611 941 A2.

### Introduction

Equipment for desalination of seawater, where one or several plate packages of heat exchanging plates form the main components in the process, have been manufactured since many years. SE-B-464 938 discloses such a desalination plant comprising a plate package provided in a cylindrical container. The heat exchanging plates have no ports for steam, but instead the space outside the heat exchanging plates is used as flow paths for the steam, depending on the kind of process. The process used is based on the so-called falling film technology in which a film of water is distributed across the width of the plates and run downwardly on the plates. In a plate evaporator of the falling film type, every second plate interspace constitutes an evaporation space whereas the rest of the plate interspaces constitute spaces for a heat emitting medium. The container is a substantially cylindrical pressure vessel. In a large plant including several plate packages, these may be arranged in the longitudinal direction of the cylinder. To a certain extent, the container is limiting for the size of the plant, if not several containers may be included in the plant.

To improve the efficiency of the plant, it may be provided with multiple stages.

One examples of a multi stage desalination plant may be found in US 5133837 which discloses a multi stage flash evaporator in which the sea water to be evaporated is passed into a bottom chamber of each stage vessel, with vapor flowing upwardly through demisters and channels, into contact with the dimpled plates, and the condensate falling as a thin film down the plates and collecting in the condensate trough. US 6635150 discloses a distilling plant which is made up of plural cascades of elementary cells alternatively assembled in thermal series.

At least for smaller or medium sized plants, the cost for the container is a large part of the total cost for the plant. The manufacturing and mounting of the container are both complex and time consuming. In addition, maintenance of the plant and cleaning of the heat exchanging plates are difficult, for instance since the plate package and the heat exchanging plates only are accessible after opening of the container.

The solution to the above problem may be found in the international application WO 2006/104443 A1 assigned to Alfa Laval Corporate AB. It discloses a plate heat exchanger for desalination. The heat exchanger has an evaporation section, a separation section and a condensation section. The advantage of the above-mentioned heat exchanger is that it does not need any container since the whole treatment of the seawater is performed in the plate package.

The opposite sides of the plate of the evaporation section and the condensation section define a heating section and a cooling section, respectively. In the heating section a heating fluid is circulating and in the cooling section a cooling fluid is circulating. A guide formed by a barrier gasket is used in the heating section and cooling section for causing the heating medium and cooling medium, respectively, to flow over the complete heat transfer area of the respective heating section and cooling section. The guide causes the flow to distribute over the heat transfer area even though the inlet and outlet are located adjacent each other.

DE 196 47 185 describes a heat exchanger having a rod in the flow channel for guiding the flow.

EP 0 611 941 B1 describes a plate heat exchanger having plates provided with a plurality of parallel ribs being offset from one another forming a meandering chamber.

US 9,228,784 B1 describes a plate heat exchanger having flow channel having flow barriers of a flow guide which overlap in the horizontal direction and thus form a serpentine flow channel.

US 2016/0245591 describes a plate heat exchanger having at least one barrier forming part of a guide for the flow of the first medium during passage thereof between the inlet and outlet portholes.

WO 2010/013608 discloses a plate evaporator/condenser with a flow guide.

WO 2018/19174 discloses a heat exchanger having a gasket strip for guiding the flow.

The object of the present invention is to improve the flow and heat transfer between the heating/cooling volumes and the opposite evaporation/condensation sections, respectively.

### Summary of the invention

The above object is realized in a first aspect by a plate for a heat exchanger for heat exchange between a first medium and a second medium, the plate defining:
a longitudinal axis extending between a bottom edge and a top edge of the plate,
a transversal axis extending between two substantially parallel side edges of the plate,
a heat transfer area comprising a corrugated heat transfer pattern of alternately arranged ridges and valleys, first and second adjacent ones of the ridges extending obliquely in relation to the longitudinal axis and the transversal axis, the heat transfer area defining a first heat exchange surface for the first medium and an opposite second heat exchange surface for the second medium,
a first inlet for the first medium,
a first outlet for the first medium,
a second inlet for the second medium, and
a second outlet for the second medium,
whereby the first heat exchange surface defines a meandering flow path for the first medium between the first inlet and the first outlet, the meandering flow path being divided into an upper flow channel extending along the transversal axis in an upper part of the first heat exchange surface, a lower flow channel extending along the transversal axis in a lower part of the first heat exchange surface and at least one intermediate flow channel extending along the transversal axis in an intermediate part of the first heat exchange surface between the upper flow channel and the lower flow channel.

The heat exchanger is made up of a plate package comprised by a plurality of heat exchanger plates which are sequentially arranged in a package having first surface to first surface and second surface to second surface, with a gasket in-between. The opposing first surfaces define a first plate interspace defining meandering flow path which is manifested by the gasket located in-between the plates. The plate itself define a groove for the gasket.

The flow path in the first plate interspace defines at least three passes, meaning that the flow is forced by the gasket to follow the meandering flow path for at least three transversal passages. Each transversal passage defines a flow channel, and each plate define one flow channel communicating with the inlet, one flow channel communicating with the outlet, and at least one flow channel providing fluid communication between the inlet flow channel and the outlet flow channel. The channels are parallel and connected in series. The channels thus define an upper flow channel, a lower flow channel and one or more intermediate flow channels between the upper and lower flow channels. The expressions upper, lower etc is to be understood based on the orientation of the plate when in use.

The second surface is part of an evaporator or a condenser which is formed in the second plate interspace between second surfaces of opposing plates. The evaporator has an inlet for feed, being a liquid, such as sea water, and an outlet for vapor, such as steam. The evaporator typically evaporates only a part of the liquid, and thus also has an outlet for non-evaporated feed, e.g. brine. The condenser has an inlet for vapor, such as steam, and an outlet for liquid, such as fresh water. In the evaporator, the vapor outlet is located above the sea water inlet when the heat exchanger is in its normal position of use, as the steam flows upwards. Similar, the fresh water outlet is located below the vapor inlet for the condenser as the liquid flows downwards due to gravity.

The longitudinal axis is understood to be substantially vertical when the heat exchanger is in its normal operating position. The transversal axis is thereby substantially horizontal when the heat exchanger is in its normal operating position and the ridges and valleys project transversally to both the longitudinal and transversal axes. Opposing ridges contact at contact points, establishing a heat transfer pattern in the plate interspaces.

Increasing the number of passes from the typical two passes to three passes or more will increase the velocity of the flow provided that all other parameters are kept constant, as the thermal length increases, and the flow area, i.e. crosssection, decreases. This will yield more turbulent flow which in turn will increase the heat transfer. The increase of the flow velocity will also increase the pressure difference between the inlet and the outlet. A small pressure difference between the inlet and outlet will cause maldistribution between the plate interspaces of the plate package. A large pressure difference between the inlet and the outlet will consequently improve the flow distribution along the first plate interspaces of the plate package.

According to a further embodiment of the first aspect, the flow channels being positioned adjacent each other along the longitudinal axis.

Thereby a meandering flow path may be achieved allowing a greater utilisation of the plate by allowing the fluid to flow mainly in the transversal direction except for a small longitudinal portion at the interconnection between channels.

According to a further embodiment of the first aspect, the first inlet is located adjacent the first outlet.

In this way the inlet conduit and the outlet conduit may be located adjacent each other.

According to a further embodiment of the first aspect, the plate defines
an evaporation section being arranged to permit evaporation of at least a part of a feed,
a separation section being arranged to separate a non-evaporated part of the feed from an evaporated part of the feed,
a condensation section being arranged to condense the evaporated part of the feed,
whereby the second heat exchange surface is formed in the evaporation section and/or the condensation section.

A three-in-one plate is realized by allowing evaporation, separation and condensation to take place on the same plate. As stated above, the second surface is part of an evaporator or a condenser.

According to a further embodiment of the first aspect, the first medium is a heating medium and the second medium is a feed to be evaporated. In this way an evaporator is realized.

According to a further embodiment of the first aspect, the upper channel being connected to the first inlet and the lower channel being connected to the first outlet.

Thereby the hot heating fluid from the inlet will transfer heat to the hot part of the vapor while the slightly colder heating fluid at the outlet which has already released some heat to the feed will transfer heat to the colder feed which is introduced at the feed inlet adjacent the bottom of the evaporation section. The heating fluid will also flow counter current in relation to feed on the opposite side of the plate. However, it is also possible to have the heating fluid flow co-current in relation to feed by switching the inlet and outlet.

According to a further embodiment of the first aspect, the first medium is a cooling medium and the second medium is a vapor to be condensed, the lower channel being connected to the first inlet and the upper channel being connected to the first outlet.

Thereby the cold cooling fluid from the inlet will transfer heat to the cold part of the vapor while the slightly hotter cooling fluid at the outlet which has already absorbed some heat to the vapor will transfer heat to the hotter vapor which is introduced at the vapor inlet adjacent the top of the condensation section.

According to a further embodiment of the first aspect, a cross corrugated pattern is formed when the first heat exchange surface of the plate is juxtaposed with a first heat exchange surface of an identical plate.

The cross corrugated pattern is formed by the ridges and valleys when adjacent plates are placed face to face and adjacent ridged will contact at contact points. This flow pattern will increase both the heat transfer and the flow resistance.

According to a further embodiment of the first aspect, the cross corrugated pattern defines a higher flow resistance for the first medium along the transversal axis in the upper channel when compared to the intermediate channel(s).

In this way in the first plate interspace more time is allowed for the heat transfer between the hot heating fluid and the mostly vaporized fluid at the top of the evaporation section. In the second plate interspace, a low-pressure drop is achieved for the vapor.

According to a further embodiment of the first aspect, the cross corrugated pattern defines a lower flow resistance for the first medium along the transversal axis in the lower channel when compared to the intermediate channel(s).

In this way in the first plate interspace less time is allowed for the heat transfer between the colder heating fluid and the mostly liquid fluid at the bottom of the evaporation section. Pressure drop in the second plate interspace is of no concern as the vapor fraction is low.

According to a further embodiment of the first aspect, the first and second adjacent ones of the ridges define a greater angle to the transversal axis in the upper channel than in the intermediate channel(s).

In this way a higher flow resistance is realized in the transversal direction when the cross corrugated pattern is established. Conversely, a lower flow resistance is realized in the longitudinal direction.

According to a further embodiment of the first aspect, the first and second adjacent ones of the ridges define a smaller angle to the transversal axis in the lower channel than in the intermediate channel(s).

In this way a lower flow resistance is realized in the transversal direction when the cross corrugated pattern is established. Conversely, a higher flow resistance is realized in the longitudinal direction.

The above object is realized in a second aspect by a plate heat exchanger for treatment of a feed such as sea water, the plate heat exchanger including a plate package comprising a plurality of heat exchanging plates according to any of the preceding claims arranged in a successive order having a gasket in-between each of the plates, whereby for adjacent plates first heat exchange surfaces face each other and second heat exchange surfaces face each other.

The gasket in the first plate interspace in which first heat exchange surfaces face each other is of a first type defining the heating section, the cooling section and separation section, whereas the gasket in the second plate interspace in which second heat exchange surfaces face each other is of a second type defining the evaporation section, the condensation section and the separation section. The plate heat exchanger according to the second aspect utilises the plates according to the first aspect.

According to a further embodiment of the second aspect, the meandering flow path is defined by at least one barrier forming part of a guide for the flow of the medium between the first inlet and first outlet.

The above object is realized in a third aspect by a gasket for a plate according to the first aspect, the gasket defining the meandering flow path.

### Brief description of the drawings

Fig. 1a shows a heat exchanging plate according to the present invention
Fig. 1b shows the opposite side of the heat exchanging plate of Fig. 1a
Fig. 2 shows the corrugated pattern of the cooling section
Fig. 3a shows the corrugated pattern of the heating section
Fig. 3b shows the opposite side of the heat exchanging plate of Fig. 3a

### Detailed description of the drawings

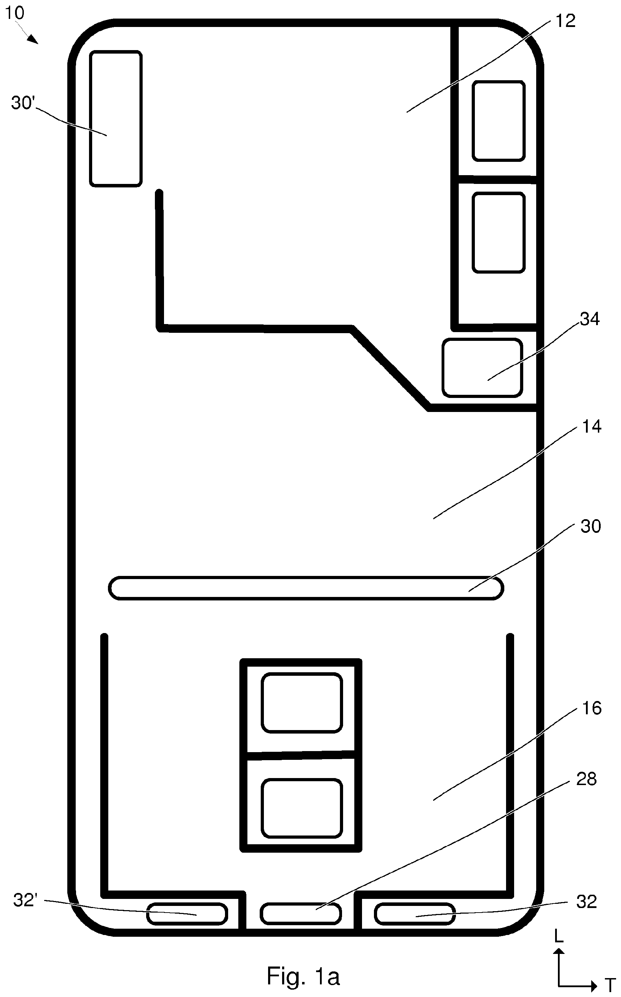

Fig. 1a shows a heat exchanging plate 10 according to the present invention. The plate 10 is corrugated. The plate 10 extends along a longitudinal axis (L) which is vertical when the plate is in its position of use, and a transversal axis (T) which is horizontal when the plate is in its position of use. The heat exchanging plate 10 may be stacked together with identical plates to form a plate package. The plate 10 defines first and second corrugated opposite surfaces which in the package are arranged such that the first surface faces a first surface of an adjacent plate and the second surface faces a second surface of an adjacent plate to form respective first and second type interspaces which are defined by gaskets and which constitutes the utility side and the process side, respectively, of the plate. The present view shows the second surface and the first surface is formed on the opposite side of the plate (not visible here). The present second surface defines an upper part constituting a condensation section 12, an intermediate part constituting a separation section 14 and a lower part constituting an evaporation section 16.

The present plate 10 is a three-in-one plate, however, the principles according to the present invention can be applied for other types of plates as well. The evaporation section 16 comprises a feed inlet 28 for introducing a liquid feed to the evaporation section. The feed inlet 28 is located at the lower part of the evaporation section 16. The evaporation section 16 will be located opposite a heating section on the opposite side of the plate.

The evaporated feed will rise towards the separation section 14 which is located on both sides of the plate 10. Communication between the sides of the plate 10 is made through the apertures 30 30'. In the separation section 14, the corrugations in the plate 10 fall into each other such that any droplets in the evaporated flow are trapped. The droplets flow towards the edges of the plates and down to the brine outlets 32 32'.

The evaporated feed enters the upper part of the condensation section 12. The opposite side of the plate 10 forms a cooling section and the evaporated feed is condensed in the condensation section 12. The condensate feed flows out via the condensate outlet 34 at the bottom of the condensation section 12.

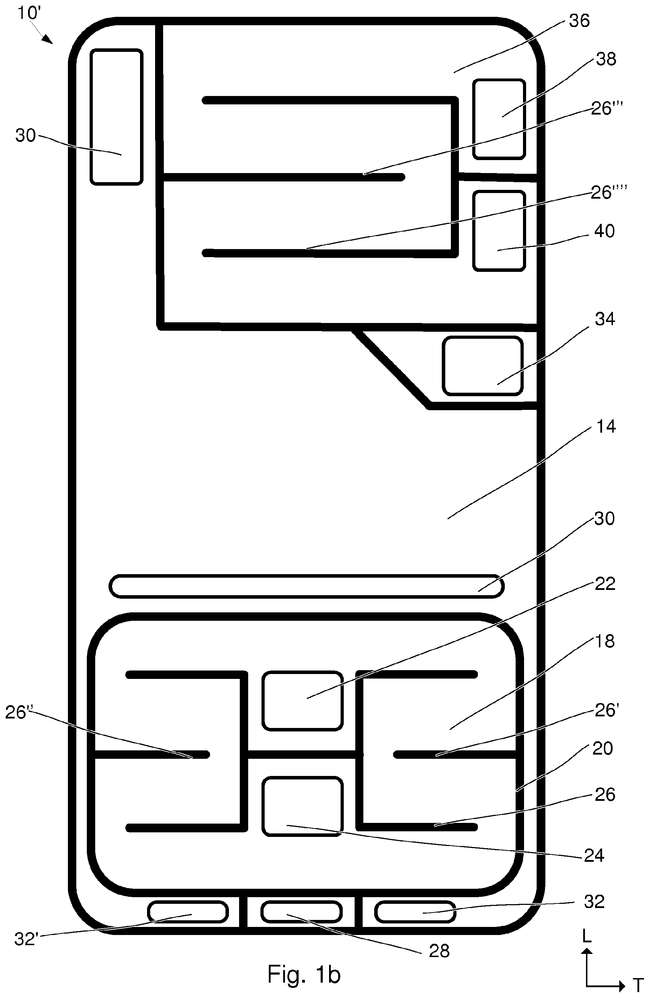

Fig. 1b shows a heat exchanging plate 10' according to the present invention, which is the opposite side of the heat exchanging plate of fig 1a. The heating section 18 is located opposite the evaporation section 12 and is delimited by a gasket 20. The heating section 18 defines a heating fluid inlet 22 for introducing a heating fluid into the heating section 18 and a heating fluid outlet 24 for letting heating fluid out from the heating section 18. It is possible to switch places of the inlet 22 and outlet 24 for allowing a co-current flow. The heating fluid may be hot water e.g. jacket water from an engine. Barriers 26 26' 26" in the form of gasket elements are provided for causing the flow of heating fluid to flow in a meandering flow path from the inlet 22 to the outlet 24.

In the present embodiment, four passes are used (although more than four passes may be used as well). Thus, the barriers 26 26' 26" are arranged such that four channels are formed in the transversal direction. In this way the velocity of the flow of heating fluid is increased compared to using only two passes as in the prior art. A higher flow velocity increases the heat transfer.

The heating fluid enters the top of the heating section 18 and flows in the transversal direction. Heat is transferred from the hot heating fluid to the feed on the opposite side, which will contain a high amount of vapor in the upper part of the evaporation section. The heating fluid continues through the meandering path and flows out at the bottom of the heating section where heat transfer is taking place between the liquid feed near the inlet 28 and heating fluid which has now been slightly cooled off due to heat transfer with the feed.

The cooling section 36 is located opposite the condensation section 12. The cooling fluid is introduced via the cooling fluid inlet 440 and let out via the cooling fluid outlet 38. The cooling fluid may be cold water, e.g. sea water. Barriers 26‴ 26"" in the form of gasket elements are provided for causing the flow of heating fluid to flow in a meandering flow path from the inlet 40to the outlet 38, similar to the heating section 18.

In the cooling section 36 four passes are used as well, similar to the heating section 18 (although more than four passes may be used as well). In this way the velocity of the flow of cooling fluid is increased compared to using only two passes as in the prior art. A higher flow velocity increases the heat transfer.

The cooling fluid enters the bottom of the cooling section 36 and flows in the transversal direction. Heat is transferred to the cold heating fluid from the feed on the opposite side, which will contain a high amount of condensate and a low amount of vapor in the lower part of the evaporation section. The cooling fluid continues through the meandering path and flows out at the top of the cooling section 36 where heat transfer is taking place between the vaporized feed near the inlet 40 and cooling fluid which has now been slightly heated off due to heat transfer with the feed.

It should be noted that in the present embodiment the heating fluid inlet and outlet are located in the centre of the plate 10 and the heating fluid flows from the centre of the plate in two oppositely located paths, whereas the cooling fluid inlet and outlet is located at the edge of the plate so that all of the cooling fluid flows in a single path. However, the locations of the inlets and outlets depend on the corresponding conduits and may be considered arbitrary. Also, more or less than four passes may be used, such as five passes or three passes. Four passes implies that the flow changes direction by a substantially 180 degrees turn at least three times between the inlet and outlet.

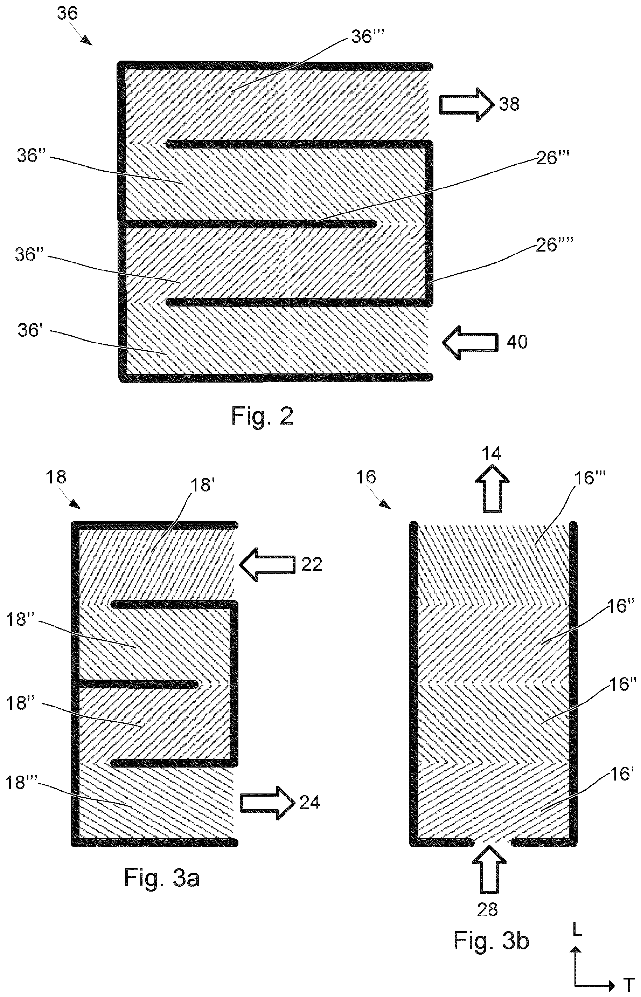

Fig. 2 shows the corrugated pattern of the heat transfer area of the cooling section 36. When the corrugated patterns of two opposing plates are juxtaposed, a cross corrugated heat transfer pattern is established. The corrugated pattern defines ridges and valleys and opposing ridges of adjacent plates will contact in the plate package. The cooling fluid enters in the transversal direction from the inlet 40 into an inlet channel 36' and follows a meandering path via two intermediate channels both designated 36" to the outlet channel 36‴ and the outlet 38. All channels 36' 36" 36‴ extend in the transversal direction and the flow follows the transversal axis as shown by the arrows.

Fig. 3a shows the corrugated pattern of the heat transfer area for the heating section 18. The cross corrugated heat transfer pattern established by two juxtaposed plates define a different pattern in the different channels 18' 18" 18"'. The heat transfer and the flow resistance depend on the angle between the ridges of the cross corrugated pattern and the flow direction. A large angle between the flow direction and the ridges yields a high flow resistance and a high heat transfer, a so called high NTU (Number Transfer Units). A small angle between the flow direction and the ridges yields a lower flow resistance and a lower heat transfer, a so called low NTU. The angle is understood to be more than 0 degrees and less than 90 degrees.

The heating fluid enters the heating section 18 from above and flows in the transversal direction. The inlet channel 18' has ridges forming a large angle relative to the transversal flow, thus high NTU. A high NTU yields a high heat transfer between the heating fluid and the feed having a high vapor content and low liquid content. The outlet channel 18‴ has ridges forming a small angle relative to the transversal flow of the heating fluid, thus low NTU. A low NTU is acceptable here since the heat transfer coefficient is low on the evaporation side. The middle channels 18" have a middle NTU pattern.

Fig. 3b shows the corrugated pattern of the heat transfer area for the evaporation section 16, being the opposite side to the heating section 18. The liquid feed enters from the inlet 28 in the lower part of the evaporation section 16. The feed flows in the longitudinal direction and is let out as vaporized feed into the separation section 14 at the top of the evaporation section 16.

The corrugations of the evaporation section 16 correspond to the corrugations of the heating section 18, i.e. a ridge corresponds to a valley etc. However, as the flow of feed in the evaporation section 16 is perpendicular to the flow of cooling fluid in the heating section 18, the high NTU channel in the heating section 18 will correspond to a low NTU channel in the evaporation section 16, and vice versa.

In the inlet flow channel 16' closest to the feed inlet 28, the feed will be mostly liquid. The inlet channel 16' has ridges forming a large angle relative to the transversal flow, thus high NTU. This is advantageous since high NTU allows the evaporation to start more quickly. In the two intermediate channels 16", a middle NTU pattern is defined on both sides. The outlet channel 16‴ is located at the top of the evaporation section 16. The outlet channel 16‴ has ridges forming a small angle relative to the longitudinal flow of the feed. A low NTU will be advantageous since the feed is mostly vapor at the top of the evaporation section 16 and the pressure drop should be kept low.

The present plate is primarily used for fresh water generators where the feed is sea water and the condensate is fresh water. However, other applications are contemplated such as production of concentrated juice etc. Further, the present application is not limited to the above embodiments which are to be construed as examples only.

## Claims

1. A plate (10;10') for a heat exchanger for heat exchange between a first medium and a second medium, the plate (10;10') defining:
a longitudinal axis (L) extending between a bottom edge and a top edge of the plate,
a transversal axis (T) extending between two substantially parallel side edges of the plate,
a heat transfer area comprising a corrugated heat transfer pattern of alternately arranged ridges and valleys, first and second adjacent ones of the ridges extending obliquely in relation to the longitudinal axis (L) and the transversal axis (T), the heat transfer area defining a first heat exchange surface (10') for the first medium and an opposite second heat exchange surface for the second medium,
a first inlet (22) for the first medium,
a first outlet (24) for the first medium,
a second inlet for (28) the second medium, and
a second outlet for the (34) second medium,
whereby the first heat exchange surface (10') defines a meandering flow path for the first medium between the first inlet (22) and the first outlet (24), the meandering flow path being divided into an upper flow channel (18'; 36‴) extending along the transversal axis (T) in an upper part of the first heat exchange surface (10'), a lower flow channel (18‴; 36') extending along the transversal axis (T) in a lower part of the first heat exchange surface (10'), and at least one intermediate flow channel (18";36") extending along the transversal axis (T) in an intermediate part of the first heat exchange surface (10') between the upper flow channel (18'; 36‴) and the lower flow channel (18"'; 36'), a cross corrugated pattern is formed when the first heat exchange surface (10') of the plate is juxtaposed with a first heat exchange surface (10') of an identical plate, **characterized in that**
the first and second adjacent ones of the ridges define a greater angle to the transversal axis (T) in the upper channel (18'; 36‴) than in the intermediate channel(s) (18"; 36") and/or,
the first and second adjacent ones of the ridges define a smaller angle to the transversal axis (T) in the lower channel (18"'; 36') than in the intermediate channel(s) (18"; 36").

2. The plate (10;10') according to any of the preceding claims, wherein the flow channels being positioned adjacent each other along the longitudinal axis (L).

3. The plate (10;10') according to claim 2, wherein the first inlet (22) is located adjacent the first outlet (24).

4. The plate according to any of the preceding claims, wherein the plate (10;10') defines
an evaporation section (16) being arranged to permit evaporation of at least a part of a feed,
a separation section (14) being arranged to separate a non-evaporated part of the feed from an evaporated part of the feed,
a condensation section (12) being arranged to condense the evaporated part of the feed,
whereby the second heat exchange surface (12) is formed in the evaporation section (16) and/or the condensation section (12).

5. The plate (10;10') according to any of the preceding claims, wherein the first medium is a heating medium and the second medium is a feed to be evaporated.

6. The plate (10;10') according to claim 5, wherein the upper channel (18'; 36‴) being connected to the first inlet (22) and the lower channel (18"'; 36') being connected to the first outlet (24).

7. The plate (10;10') according to any of the claims 1-4, wherein the first medium is a cooling medium and the second medium is a vapor to be condensed, the lower channel (18‴; 36') being connected to the first inlet (22) and the upper channel (18'; 36‴) being connected to the first outlet (24).

8. The plate (10;10') according to any of the preceding claims, wherein the cross corrugated pattern defines a higher flow resistance for the first medium along the transversal axis (T) in the upper channel (18'; 36‴) when compared to the intermediate channel(s) (18"; 36").

9. The plate (10;10') according to any of the preceding claims, wherein the cross corrugated pattern defines a lower flow resistance for the first medium along the transversal axis (T) in the lower channel (18"'; 36') when compared to the intermediate channel(s) (18"; 36").

10. A plate heat exchanger for treatment of a feed such as sea water, the plate heat exchanger including a plate package comprising a plurality of heat exchanging plates (10;10') according to any of the preceding claims arranged in a successive order having a gasket (20) in-between each of the plates (10;10'), whereby for adjacent plates (10;10') first heat exchange surfaces (10') face each other and second heat exchange surfaces (10) face each other.

11. The plate heat exchanger according to claim 10, wherein the meandering flow path is defined by at least one barrier (26 26' 26" 26‴ 26"") forming part of a guide for the flow of the medium between the first inlet (22) and first outlet (24).

12. A kit of parts comprising a plate (10;10') according to any of the claims 1-9 and a gasket for the plate (10;10') , the gasket (20) defining the meandering flow path.

## Patentansprüche

1. Platte (10; 10') für einen Wärmetauscher zum Wärmeaustausch zwischen einem ersten Medium und einem zweiten Medium, wobei die Platte (10; 10') definiert:
eine Längsachse (L), die sich zwischen einer Unterkante und einer Oberkante der Platte erstreckt,
eine Querachse (T), die sich zwischen zwei im Wesentlichen parallelen Seitenkanten der Platte erstreckt,
eine Wärmetransferfläche, die ein gewelltes Wärmetransfermuster aus abwechselnd angeordneten Graten und Tälern umfasst, wobei sich erste und zweite benachbarte der Grate schräg in Bezug auf die Längsachse (L) und auf die Querachse (T) erstrecken, wobei die Wärmetransferfläche eine erste Wärmeaustauschoberfläche (10') für das erste Medium und eine gegenüberliegende zweite Wärmeaustauschoberfläche für das zweite Medium definiert,
einen ersten Einlass (22) für das erste Medium,
einen ersten Auslass (24) für das erste Medium,
einen zweiten Einlass für (28) das zweite Medium, und
einen zweiten Auslass (34) für das zweite Medium,
wobei die erste Wärmeaustauschoberfläche (10') einen mäanderförmigen Strömungspfad für das erste Medium zwischen dem ersten Einlass (22) und dem ersten Auslass (24) definiert, der mäanderförmige Strömungspfad in einen oberen Strömungskanal (18'; 36‴), der sich entlang der Querachse (T) in einem oberen Teil der ersten Wärmeaustauschoberfläche (10') erstreckt, einen unteren Strömungskanal (18‴; 36'), der sich entlang der Querachse (T) in einem unteren Teil der ersten Wärmeaustauschoberfläche (10') erstreckt, unterteilt ist, und sich mindestens ein Zwischenströmungskanal (18"; 36") entlang der Querachse (T) in einem Zwischenteil der ersten Wärmeaustauschoberfläche (10') zwischen dem oberen Strömungskanal (18'; 36‴) und dem unteren Strömungskanal (18‴; 36') erstreckt, ein wellig verkreuztes Muster gebildet wird, wenn die erste Wärmeaustauschoberfläche (10') der Platte mit einer ersten Wärmeaustauschoberfläche (10') einer identischen Platte nebeneinander liegt, **dadurch gekennzeichnet ist, dass**
der erste und zweite angrenzende der Grate einen größeren Winkel zur Querachse (T) im oberen Kanal (18'; 36‴) definieren als in dem (den) Zwischenkanal (Zwischenkanälen) (18'; 36'), und/oder,
der erste und zweite angrenzende der Grate einen kleineren Winkel zur Querachse (T) im unteren Kanal (18"'; 36') definieren als in dem (den) Zwischenkanal (Zwischenkanälen) (18"; 36').

2. Platte (10; 10') nach einem der vorstehenden Ansprüche, wobei die Strömungskanäle entlang der Längsachse (L) nebeneinander positioniert sind.

3. Platte (10; 10') nach Anspruch 2, wobei sich der erste Einlass (22) neben dem ersten Auslass (24) befindet.

4. Platte nach einem der vorstehenden Ansprüche, wobei die Platte (10; 10') definiert
eine Verdampfungsabschnitt (16), der angeordnet ist, um eine Verdampfung von mindestens einem Teil eines Zulaufs zu erlauben,
einen Trennabschnitt (14), der angeordnet ist, um einen nicht verdampften Teil des Zulaufs von einem verdampften Teil des Zulaufs zu trennen,
einen Kondensationsabschnitt (12), der angeordnet ist, um den verdampften Teil des Zulaufs zu kondensieren,
wobei die zweite Wärmeaustauschoberfläche (12) in dem Verdampfungsabschnitt (16) und/oder dem Kondensationsabschnitt (12) gebildet ist.

5. Platte (10; 10') nach einem der vorstehenden Ansprüche, wobei das erste Medium ein Heizmedium und das zweite Medium ein zu verdampfender Zulauf ist.

6. Platte (10; 10') nach Anspruch 5, wobei der obere Kanal (18'; 36‴) mit dem ersten Einlass (22) verbunden ist, und der untere Kanal (18‴; 36') mit dem ersten Auslass (24) verbunden ist.

7. Platte (10; 10') nach einem der Ansprüche 1-4, wobei das erste Medium ein Kühlmedium ist und das zweite Medium ein zu kondensierender Dampf ist, wobei der untere Kanal (18‴; 36') mit dem ersten Einlass (22) verbunden ist und der obere Kanal (18‴; 36') mit dem ersten Auslass (24) verbunden ist.

8. Platte (10; 10') nach einem der vorstehenden Ansprüche, wobei das wellig verkreuzte Muster einen höheren Strömungswiderstand für das erste Medium entlang der Querachse (T) in dem oberen Kanal (18'; 36‴) im Vergleich zu dem (den) mittleren Kanal (Kanälen) (18"; 36") definiert.

9. Platte (10; 10') nach einem der vorstehenden Ansprüche, wobei das wellig verkreuzte Muster einen geringeren Strömungswiderstand für das erste Medium entlang der Querachse (T) in dem unteren Kanal (18‴; 36") im Vergleich zu dem (den) mittleren Kanal (Kanälen) (18"; 36") definiert.

10. Plattenwärmetauscher zur Aufbereitung eines Zulaufs wie Meerwasser, wobei der Plattenwärmetauscher ein Plattenpaket beinhaltet, das eine Vielzahl von Wärmeaustauschplatten (10; 10') nach einem der vorstehenden Ansprüche beinhaltet, die in einer aufeinanderfolgender Reihenfolge angeordnet sind, die eine Dichtung (20) jeweils zwischen den Platten (10; 10') aufweisen, wobei für angrenzende Platten (10; 10') erste Wärmeaustauschoberflächen (10') einander zugewandt sind und zweite Wärmeaustauschoberflächen (10) einander zugewandt sind.

11. Plattenwärmetauscher nach Anspruch 10, wobei der mäanderförmige Strömungspfad durch mindestens eine Barriere (26 26' 26" 26‴ 26"") definiert ist, die einen Teil einer Führung für die Strömung des Mediums zwischen dem ersten Einlass (22) und dem ersten Auslass (24) bildet.

12. Kit mit Teilen, der eine Platte (10; 10') nach einem der Ansprüche 1-9 und eine Dichtung für die Platte (10; 10') umfasst, wobei die Dichtung (20) den mäanderförmigen Strömungspfad definiert.

## Revendications

1. Plaque (10 ; 10') pour un échangeur de chaleur pour un échange de chaleur entre un premier milieu et un second milieu, la plaque (10 ; 10') définissant :
un axe longitudinal (L) s'étendant entre un bord inférieur et un bord supérieur de la plaque,
un axe transversal (T) s'étendant entre deux bords latéraux sensiblement parallèles de la plaque,
une zone de transfert de chaleur comprenant un motif de transfert de chaleur ondulé de crêtes et de vallées agencées alternativement, les première et seconde crêtes adjacentes des crêtes s'étendant obliquement par rapport à l'axe longitudinal (L) et à l'axe transversal (T), la zone de transfert de chaleur définissant une première surface d'échange de chaleur (10') pour le premier milieu et une seconde surface d'échange de chaleur opposée pour le second milieu,
un premier orifice d'entrée (22) pour le premier milieu,
un premier orifice de sortie (24) pour le premier milieu,
un second orifice d'entrée (28) pour le second milieu, et
un second orifice de sortie (34) pour le second milieu,
selon laquelle la première surface d'échange de chaleur (10') définit un trajet d'écoulement sinueux pour le premier milieu entre le premier orifice d'entrée (22) et le second orifice de sortie (24), le trajet d'écoulement sinueux étant divisé en un canal d'écoulement supérieur (18' ; 36‴) s'étendant le long de l'axe transversal (T) dans une partie supérieure de la première surface d'échange de chaleur (10'), un canal d'écoulement inférieur (18 " ; 36") s'étendant le long de l'axe transversal (T) dans une partie inférieure de la première surface d'échange de chaleur (10') et au moins un canal d'écoulement intermédiaire (18' ; 36"') s'étendant le long de l'axe transversal (T) dans une partie intermédiaire de la première surface d'échange de chaleur (10') entre le canal d'écoulement supérieur (18' ; 36‴) et le canal d'écoulement inférieur (18‴' ; 36'), un motif ondulé croisé est formé lorsque la première surface d'échange de chaleur (10') de la plaque est juxtaposée à une première surface d'échange de chaleur (10') d'une plaque identique, **caractérisée en ce que**
les première et seconde crêtes adjacentes des crêtes définissent un angle plus grand avec l'axe transversal (T) dans le canal supérieur (18'; 36‴) que dans le ou les canaux intermédiaires (18" ; 36") et/ou,
les première et seconde crêtes adjacentes des crêtes définissent un angle plus petit avec l'axe transversal (T) dans le canal inférieur (18"' ; 36') que dans le ou les canaux intermédiaires (18"; 36").

2. Plaque (10 ; 10') selon l'une quelconque des revendications précédentes, dans laquelle les canaux d'écoulement sont positionnés de manière adjacente les uns aux autres le long de l'axe longitudinal (L).

3. Plaque (10 ; 10') selon la revendication 2, dans laquelle le premier orifice d'entrée (22) est situé de manière adjacente au second orifice de sortie (24).

4. Plaque selon l'une quelconque des revendications précédentes, dans laquelle la plaque (10 ; 10') définit
une section d'évaporation (16) qui est agencée pour permettre une évaporation d'au moins une partie d'une alimentation,
une section de séparation (14) qui est agencée pour séparer une partie non évaporée de l'alimentation d'une partie évaporée de l'alimentation,
une section de condensation (12) qui est agencée pour condenser la partie évaporée de l'alimentation,
selon laquelle la seconde surface d'échange de chaleur (12) est formée dans la section d'évaporation (16) et/ou la section de condensation (12).

5. Plaque (10 ; 10') selon l'une quelconque des revendications précédentes, dans laquelle le premier milieu est un milieu chauffant et le second milieu est une alimentation à évaporer.

6. Plaque (10 ; 10') selon la revendication 5, dans laquelle le canal supérieur (18' ; 36‴) est raccordé au premier orifice d'entrée (22) et le canal inférieur (18"' ; 36') est raccordé au second orifice de sortie (24).

7. Plaque (10 ;10') selon l'une quelconque des revendications 1-4, dans laquelle le premier milieu est un milieu de refroidissement et le second milieu est une vapeur à condenser, le canal inférieur (18" ; 36') étant raccordé au premier orifice d'entrée (22) et le canal supérieur (18' ; 36"') étant connecté au second orifice de sortie (24).

8. Plaque (10 ; 10') selon l'une quelconque des revendications précédentes, dans laquelle le motif ondulé croisé définit une résistance à l'écoulement plus élevée pour le premier milieu le long de l'axe transversal (T) dans le canal supérieur (18' ; 36"') par rapport au ou aux canaux intermédiaires (18"; 36").

9. Plaque (10 ; 10') selon l'une quelconque des revendications précédentes, dans laquelle le motif ondulé croisé définit une résistance à l'écoulement plus faible pour le premier milieu le long de l'axe transversal (T) dans le canal inférieur (18" ; 36') par rapport au ou aux canaux intermédiaires (18" ; 36").

10. Échangeur de chaleur à plaques pour le traitement d'une alimentation telle que l'eau de mer, l'échangeur de chaleur à plaques incluant un ensemble de plaques comprenant une pluralité de plaques d'échange de chaleur (10 ; 10') selon l'une des revendications précédentes agencées dans un ordre successif présentant un joint (20) entre chacune des plaques (10 ; 10'), selon lequel, pour des plaques adjacentes (10 ; 10'), des premières surfaces d'échange de chaleur (10') se font face et des secondes surfaces d'échange de chaleur (10) se font face.

11. Échangeur de chaleur à plaques selon la revendication 10, dans lequel le trajet d'écoulement sinueux est défini par au moins une barrière (26, 26', 26", 26‴, 26"") faisant partie d'un guide pour l'écoulement du milieu entre le premier orifice d'entrée (22) et le second orifice de sortie (24).

12. Kit de pièces comprenant une plaque (10 ; 10') selon l'une quelconque des revendications 1-9 et un joint pour la plaque (10 ; 10'), le joint (20) définissant le trajet d'écoulement sinueux.
